# EUROPÄISCHE PATENTANMELDUNG

(11) **EP 4 530 991 A1**
(43) Veröffentlichungstag der Anmeldung: **02.04.2025**
(21) Anmeldenummer: 23200612.2
(22) Anmeldetag: 28.09.2023
(51) Int. Cl.: G06V 10/10, G06V 10/44, G06V 10/764, G06V 10/80, G06V 10/82, G06V 10/94, G06V 20/58

(54) **VERARBEITUNG VON MESSDATEN MIT VERBESSERTER FUSION MEHRERER MESSMODALITÄTEN**

(71) Anmelder: Robert Bosch GmbH, 70442 Stuttgart (DE)
(72) Erfinder: Fischer, Volker, 71272 Renningen (DE); Wang, Kaiwen, 76131 Karlsruhe (DE); Helian, Bobo, 76133 Karlsruhe (DE)

(57) **Zusammenfassung**

Verfahren (100) zur Verarbeitung von Messdaten (3, 3a, 3b), die durch Beobachtung einer Szenerie (1) mit einem oder mehreren Sensoren (2a, 2b) erhalten wurden, im Hinblick auf die Lösung einer vorgegebenen Aufgabe, mit den Schritten:
• verschiedene nicht deckungsgleiche Anteile (3a, 3b) der Messdaten (3) werden mit verschiedenen trainierten Verarbeitungseinheiten (4a, 4b) jeweils in Repräsentationen (5a, 5b) in ein und demselben Arbeitsraum (5) überführt (110);
• verschiedenen Anteilen (3a, 3b) der Messdaten (3) und/oder Repräsentationen (5a, 5b) werden Prioritäten (6a, 6b) zugewiesen (120), mit denen sie für die Lösung der vorgegebenen Aufgabe herangezogen werden sollen;
• es wird anhand mindestens eines vorgegebenen Bewertungskriteriums (7) geprüft (130), ob die verschiedenen Anteile (3a, 3b) der Messdaten (3) und/oder Repräsentationen (5a, 5b) für die Lösung der vorgegebenen Aufgabe brauchbar sind;
• Repräsentationen (5a, 5b) werden, insoweit sie als brauchbar identifiziert wurden bzw. sich auf als brauchbar identifizierte Anteile (3a, 3b) der Messdaten (3) beziehen, nach Maßgabe ihrer Prioritäten (6a, 6b), bzw. der Prioritäten (6a, 6b) der jeweils zugehörigen Anteile (3a, 3b) der Messdaten (3), zu einer Gesamt-Repräsentation (8) fusioniert (140); und
• diese Gesamt-Repräsentation (8) wird mit einem trainierten Task-Kopf (9) zu einer Ausgabe (10) im Hinblick auf die vorgegebene Aufgabe verarbeitet (150).

## Beschreibung

Die vorliegende Erfindung betrifft die Verarbeitung multimodaler Messdaten, wie sie beispielsweise bei der Überwachung des Umfelds eines Fahrzeugs mit mehreren Sensoren anfallen.

### Stand der Technik

Das Führen eines Fahrzeugs oder Roboters auf einem Betriebsgelände oder gar im öffentlichen Straßenverkehr erfordert eine ständige Überwachung des Umfelds des Fahrzeugs bzw. Roboters, um auf Hindernisse, anderer Verkehrsteilnehmer oder andere verkehrsrelevante Objekte rechtzeitig reagieren zu können. Hierfür werden insbesondere beispielsweise Kamerabilder verwendet.

Hierbei gibt es keine einzelne Messmodalität, für die realistisch garantiert werden kann, dass sie zu jeder Zeit und unter allen Umständen funktioniert. So kann beispielsweise eine Kamera vorübergehend kein Bild liefern, wenn die tiefstehende Sonne direkt in ihr Objektiv einstrahlt und den Bildsensor in die Sättigung treibt. Bei heftigem Schneefall oder Starkregen kann die Kamera als solche zwar noch funktionsfähig sein, aber die Bilder können durch den Niederschlag dominiert werden, so dass verkehrsrelevante Objekte kaum auszumachen sind.

Daher ist es vorteilhaft, für die Umfeldüberwachung mehrere Messmodalitäten einzusetzen. Es besteht dann eine vergleichsweise hohe Wahrscheinlichkeit, dass zu jeder Zeit mindestens eine dieser Messmodalitäten verlässliche Informationen liefert und so eine weitere Planung des Verhaltens des Fahrzeugs bzw. Roboters ermöglicht.

### Offenbarung der Erfindung

Die Erfindung stellt ein Verfahren zur Verarbeitung von Messdaten, die durch Beobachtung einer Szenerie mit einem oder mehreren Sensoren erhalten wurden, bereit. Das Ziel dieser Verarbeitung ist das Ermitteln einer Ausgabe, die eine Lösung einer vorgegeben Aufgabe darstellt, wie beispielsweise eine Klassifikation verkehrsrelevanter Objekte.

Im Rahmen dieses Verfahrens werden verschiedene nicht deckungsgleiche Anteile der Messdaten mit verschiedenen trainierten Verarbeitungseinheiten jeweils in Repräsentationen in ein und demselben Arbeitsraum überführt. Dieser Arbeitsraum, der auch als "latenter Raum" bezeichnet wird, kann insbesondere beispielsweise eine geringere Dimensionalität haben als der Raum, in dem die Messdaten erfasst wurden. Das heißt, ein Element dieses latenten Raums kann von einer geringeren Anzahl Variablen abhängen als ein Bild oder ein anderer Record von Messdaten. Hierbei ist der Begriff "Record" analog zur Verwendung des englischen Begriffs "record" zu sehen und bezeichnet eine Sammlung von Werten zusammenhängender Messgrößen und anderer Daten, vergleichbar mit dem Inhalt einer Karteikarte. Der intuitivere Begriff "Datensatz" ist im Sprachgebrauch auf dem Fachgebiet des Machine Learnings bereits belegt für eine Menge vieler Records, vergleichbar mit einem mit vielen Karteikarten gefüllten Karteikasten.

Die Verarbeitungseinheit kann somit insbesondere beispielsweise ein Encoder sein, der einen Record von Messdaten auf eine Repräsentation in dem Arbeitsraum abbildet. Dieser Encoder kann insbesondere beispielsweise so "kontrastiv" trainiert sein, dass er ähnliche Records von Messdaten auf Repräsentationen abbildet, die gemäß einer beliebigen Metrik im Arbeitsraum nahe beieinander sind. Umgekehrt sind dann Repräsentationen von zueinander nicht ähnlichen Records im Arbeitsraum weiter voneinander entfernt.

Verschiedenen Anteilen der Messdaten und/oder Repräsentationen, d.h. verschiedenen Anteilen der Messdaten, verschiedenen Repräsentationen als Ganzes oder auch verschiedenen Anteilen von Repräsentationen, werden Prioritäten zugewiesen, mit denen sie für die Lösung der vorgegebenen Aufgabe herangezogen werden sollen. In diesen Prioritäten kann sich insbesondere Vorwissen dahingehend widerspiegeln, anhand welcher Art (Modalität) von Messdaten sich die vorgegebene Aufgabe am besten lösen lässt - wenn denn diese Art von Messdaten gerade verfügbar ist. Wenn die vorgegebene Aufgabe beispielsweise umfasst, bewegte Objekte in einem Umfeld zu klassifizieren, dann ist dies aus einem optischen Fluss einfacher möglich als aus statischen Bildern. Ist aber der optische Fluss einmal nicht verfügbar, ist eine Analyse auf der Basis statischer Bilder immer noch viel besser als gar keine Analyse.

Daher wird anhand mindestens eines vorgegebenen Bewertungskriteriums geprüft, ob die verschiedenen Anteile der Messdaten und/oder Repräsentationen für die Lösung der vorgegebenen Aufgabe brauchbar sind. Hierbei ist unter "brauchbar" insbesondere beispielsweise zu verstehen, dass die Messdaten gültige Werte enthalten und in ihnen eine Information steckt, die im Hinblick auf die vorgegebene Aufgabe auswertbar ist. Wenn beispielsweise die Bewegung eines bestimmten Objekts verfolgt werden soll, genügt es nicht, dass die Kamera überhaupt funktionsfähig ist und Bilder ausgibt. Es muss auch das fragliche Objekt im Bild sichtbar sein und darf nicht etwa durch ein anderes Objekt verdeckt sein.

Insoweit eine Repräsentation, bzw. ein Anteil einer Repräsentation, für sich genommen als brauchbar identifiziert wird, bzw. sich auf als brauchbar identifizierte Anteile der Messdaten bezieht, kommt diese Repräsentation, bzw. dieser Anteil, für die Lösung der vorgegebenen Aufgabe in die engere Wahl. Derartige Repräsentationen, bzw. Anteile von Repräsentationen, werden nach Maßgabe ihrer Prioritäten, bzw. der Prioritäten der jeweils zugehörigen Anteile der Messdaten, zu einer Gesamt-Repräsentation fusioniert. Diese Gesamt-Repräsentation wird mit einem trainierten Task-Kopf zu einer Ausgabe im Hinblick auf die vorgegebene Aufgabe verarbeitet.

Es wurde erkannt, dass es auf diese Weise deutlich erleichtert wird, eine Vielzahl von Messmodalitäten für die Lösung der vorgegebenen Aufgabe heranzuziehen. Insbesondere kann vermieden werden, dass mit zunehmender Anzahl berücksichtigter Messmodalitäten und somit Verarbeitungseinheiten die in den Messdaten enthaltene Information immer weiter verdünnt und verwässert wird. Ohne Berücksichtigung der Prioritäten kann die Hinzunahme einer neuen Messmodalität möglicherweise in bestimmten Situationen, die den Anlass zu dieser Hinzunahme gegeben haben, hilfreich sein. Der Beitrag dieser neuen Messmodalität muss dann aber auch in allen anderen Situationen, die durch die bisherigen Messmodalitäten schon sehr gut abgedeckt waren, berücksichtigt werden auf das Risiko hin, dass das Endergebnis eher schlechter als besser wird.

Im Extremfall kann eine Messmodalität sogar in den allermeisten Situationen keinen sinnvollen zusätzlichen Beitrag liefern, sondern lediglich in bestimmten Notfällen, in denen sie dann aber auch gleich unverzichtbar wird. Wenn beispielsweise in einem modernen Verkehrsflugzeug noch ein Kompass und ein Höhenmesser als rudimentäre mechanische Instrumente eingebaut werden, werden die wenigsten Piloten, die dieses Flugzeug fliegen, jemals hiervon Gebrauch machen. Die elektronischen Instrumente sind viel einfacher abzulesen und auch viel genauer als die rein mechanischen "Schätzeisen". Wenn aber ein totaler Stromausfall das ganze Cockpit lahmlegt, sind die mechanischen Instrumente die letzte Hoffnung, das Flugzeug überhaupt noch sanft zu landen.

Das hier vorgeschlagene Verfahren ermöglicht es, beliebig viele Messmodalitäten "ohne Reue" hinzuzunehmen, auch wenn diese nur sehr selten benötigt werden.

In einer besonders vorteilhaften Ausgestaltung umfasst das Fusionieren, aus den Repräsentationen für als brauchbar identifizierte Anteile der Messdaten (bzw. aus den als brauchbar identifizierten Repräsentationen) eine Repräsentation des Anteils der Messdaten mit der höchsten Priorität als Gesamt-Repräsentation auszuwählen. Auf diese Weise werden immer diejenigen Messdaten verwendet, die sich ausweislich der Prioritäten am besten für die Lösung der vorgegebenen Aufgabe eignen. Hierbei entfällt insbesondere die Notwendigkeit, mehrere Repräsentationen, die aus ganz unterschiedlichen Messmodalitäten stammen, miteinander zu verrechnen. Je höher die Dimensionalität der Repräsentationen ist, desto schwieriger ist diese Verrechnung. Die Berücksichtigung immer nur der am besten geeigneten Messdaten kann in Anlehnung an den Greedy-Optimierungsalgorithmus, der immer die aus momentaner Sicht beste Alternative auswählt, auch als Greedy-Fusion bezeichnet werden.

In einer weiteren besonders vorteilhaften Ausgestaltung bezieht sich ein erster Anteil der Messdaten auf Messungen eines dynamischen Verhaltens, während sich ein zweiter Anteil der Messdaten auf Messungen eines statischen Zustands bezieht. Dieses Messungen können sich insbesondere beispielsweise auf gleiche oder ähnliche Messgrößen beziehen. Der statische Zustand einerseits und das dynamische Verhalten andererseits lassen sich häufig unterschiedlich gut messen, und sie können sich gegenseitig ergänzen. Im zuvor genannten Beispiel etwa können sich die Messung des optischen Flusses einerseits und die Aufnahme statischer Bilder andererseits ergänzen. Es können auch für bestimmte Aspekte der Auswertung der Szenerie beide Auswertungen kombiniert werden. Beispielsweise können statische Aspekte der Szenerie aus statischen Bildern analysiert werden, während dynamische Aspekte aus dem optischen Fluss analysiert werden können.

Somit kann das Fusionieren insbesondere beispielsweise umfassen, Wert der Gesamt-Repräsentation aus Werten verschiedener Repräsentationen, die für sich genommen unverändert bleiben, zusammenzustellen. Das gleiche Prinzip lässt sich beispielsweise auch auf zwei Messmodalitäten gleicher physikalischer Natur anwenden, die teilweise überlappende Bereiche beobachten. Wenn beispielsweise zwei Kameras die Szenerie aus unterschiedlichen Perspektiven beobachten, kann ein für die Analyse der Szenerie wichtiges Objekt aus einer ersten Perspektive verdeckt sein, aus einer zweiten Perspektive jedoch sichtbar sein. Dann kann beispielswiese die meiste Bildinformation aus der ersten Perspektive bezogen und das Fehlende aus der zweiten Perspektive aufgefüllt werden. Auch Bildanteile, die etwa durch das Einfallen eines starken spekularen Lichtreflexes "ausbrennen", lassen sich auf diese Weise reparieren: Wenn die Sonne, ein Objekt und die erste Kamera geometrisch zueinander so stehen, dass Sonnenlicht direkt in diese Kamera reflektiert wird, ist diese geometrische Beziehung nicht unbedingt auch für die zweite Kamera erfüllt.

In einer weiteren besonders vorteilhaften Ausgestaltung beinhalten die Verarbeitungseinheiten Faltungsschichten, die die Eingabe der jeweiligen Verarbeitungseinheit durch gleitende Anwendung eines oder mehrerer Filter in ein oder mehrere Merkmalskarten als Repräsentation überführen. Dann ist es besonders einfach, Merkmale aus mehreren Merkmalskarten zu einer Gesamt-Repräsentation zu kombinieren, wobei diese Merkmale selbst für sich genommen unverändert bleiben.

In einer weiteren besonders vorteilhaften Ausgestaltung umfassen die Repräsentationen eine Segmentierung der Messdaten in Bezug auf in der Szenerie vorhandene Objekte, und/oder Bounding-Boxen, die in der Szenerie vorhandene Objekte einschließen. Derartige Repräsentationen werden für die Lösung vieler Aufgaben benötigt. Beispielsweise hängt die Planung des Verhaltens von Fahrzeugen oder Robotern maßgeblich davon ab, wo im Raum Objekte vorhanden sind und von welchem Typ diese sind. Indem nun die besten verfügbaren Messdaten, bzw. die besten verfügbaren Repräsentationen, herangezogen werden, wird die beste Grundlage für die Arbeit des Task-Kopfes geschaffen.

Wie zuvor erläutert, umfassen die Sensoren in einer besonders vorteilhaften Ausgestaltung Kameras, die aus unterschiedlichen Perspektiven zumindest teilweise überlappende Bereiche der Szenerie beobachten.

In einer weiteren besonders vorteilhaften Ausgestaltung umfasst die Ausgabe des Task-Kopfes
- Klassifikations-Scores in Bezug auf eine oder mehrere Klassen einer vorgegebenen Klassifikation, und/oder
- mindestens einen Regressionswert einer gesuchten Größe in Bezug auf die Szenerie und/oder ein in der Szenerie enthaltenes Objekt.

Hierbei können sich die Klassifikations-Scores auf die Szenerie als Ganzes beziehen. Beispielsweise kann eine Verkehrssituation als "normal" oder "gefährlich" klassifiziert werden. Die Klassifikations-Scores können sich aber auch beispielsweise auf einzelne Objekte beziehen und etwa Typen von Objekten angeben. Die Klassifikations-Scores und/oder Regressionswerte sind gerade bei der Verhaltensplanung von Fahrzeugen oder Robotern wichtige Bausteine, aus denen sich eine Gesamtbewertung der Szenerie erstellen lässt.

In einer weiteren besonders vorteilhaften Ausgestaltung wird aus der Ausgabe des Task-Kopfes ein Ansteuersignal ermittelt. Ein Fahrzeug, ein Fahrassistenzsystem, ein Roboter, ein System zur Qualitätskontrolle, ein System zur Überwachung von Bereichen, und/oder ein System zur medizinischen Bildgebung wird mit dem Ansteuersignal angesteuert. Durch die verbesserte Fusion von Repräsentationen, die zu einer besseren Genauigkeit des vom Task-Kopf gelieferten Ergebnisses führt, wird letztendlich die Wahrscheinlichkeit erhöht, dass die Reaktion des jeweils angesteuerten technischen Systems auf das Ansteuersignal der durch die Messdaten verkörperten Situation angemessen ist.

Das zuvor beschriebene Verfahren lässt sich mit in beliebiger Weise trainierten Verarbeitungseinheiten nutzen. Voraussetzung ist lediglich, dass die von allen Verarbeitungseinheiten gelieferten Repräsentationen dem gleichen Arbeitsraum angehören, also die gleiche Dimensionalität haben. Der Task-Kopf, der von den Bemühungen zur Fusion nichts mitbekommt, erwartet immer eine Eingabe ein und derselben Dimensionalität.

Das Training speziell mehrerer Verarbeitungseinheiten lässt sich jedoch auf den Einsatz in dem zuvor beschriebenen Verfahren maßschneidern. Damit sich mehrere Messmodalitäten, die unterschiedliche Anteile der Messdaten liefern, ergänzen können, sollten diese Messmodalitäten unabhängig voneinander sein und dies während des Trainings auch bleiben. Wenn nun beide Messmodalitäten auf gleichen oder ähnlichen physikalischen Messprinzipien beruhen, können die Trainings beider Verarbeitungseinheiten dahingehend abdriften, dass sie sich immer weiter aneinander angleichen. Wenn beispielsweise
- eine erste Verarbeitungseinheit darauf trainiert wird, den optischen Fluss auf Repräsentationen im Arbeitsraum zu transformieren, und
- eine zweite Verarbeitungseinheit darauf trainiert wird, statische Bilder auf Repräsentationen im gleichen Arbeitsraum zu transformieren,
kann sich bei einem unabhängigen Training beider Verarbeitungseinheiten beispielsweise das Training der ersten Verarbeitungseinheit in die Richtung entwickeln, dass die erste Verarbeitungseinheit analog zur zweiten ebenfalls nur statische Bilder analysiert. Damit ginge die dynamische Information im optischen Fluss verloren, und die beiden Messmodalitäten wären nach der Bildung der Repräsentationen im Arbeitsraum nicht mehr voneinander unabhängig. Das Verhalten ist ein Stück weit analog zur Tendenz eines Schülers, sich gegen das mühsame Erlernen einer neuen Fähigkeit zu sperren und stattdessen zu versuchen, auch diejenigen Hausaufgaben, die auf diese neue Fähigkeit abzielen, irgendwie halbwegs mit den bereits vorhandenen Fähigkeiten hinzubekommen.

Daher stellt die Erfindung auch ein Verfahren zum Trainieren mindestens einer ersten Verarbeitungseinheit und einer zweiten Verarbeitungseinheit für den Einsatz in dem zuvor beschriebenen Verfahren bereit.

Im Rahmen dieses Verfahrens wird ein Trainings-Datensatz mit Trainings-Beispielen für Messdaten bereitgestellt. Dieser Trainings-Datensatz enthält, ohne Beschränkung der Allgemeinheit, speziell in Bezug auf Eingaben für die erste Verarbeitungseinheit
- sowohl Positiv-Beispiele, für die bekannt ist, dass sie für die Lösung der vorgegebenen Aufgabe nutzbare Information enthalten,
- als auch Negativ-Beispiele, für die bekannt ist, dass sie keine für die Lösung der vorgegebenen Aufgabe nutzbare Information enthalten.
Weiterhin enthält der Trainings-Datensatz in Bezug auf Eingaben für die zweite Verarbeitungseinheit Alternativ-Beispiele enthält, die sich auf gleiche Szenerien beziehen wie Negativ-Beispiele.

Die erste Messmodalität, deren Messdaten von der ersten Verarbeitungseinheit zu Repräsentationen transformiert werden, hat die höhere Priorität. Wenn also ein Trainings-Beispiel aus dem Trainings-Datensatz ein Positiv-Beispiel ist, soll vorrangig die erste Verarbeitungseinheit eine Repräsentation erzeugen, die anschließend vom Task-Kopf weiter verarbeitet wird. Wenn das Trainings-Beispiel hingegen ein Negativ-Beispiel ist, sollen die zweite Messmodalität und die von der zweiten Verarbeitungseinheit erzeugte Repräsentation einen echten Mehrwert liefern. Das heißt, die in der gleichen Situation von der zweiten Verarbeitungseinheit auf der Basis des Alternativ-Beispiels erzeugte Repräsentation sollte sich von der Repräsentation, die die erste Verarbeitungseinheit aus dem Negativ-Beispiel erzeugt hat, möglichst deutlich unterscheiden. Dieser Unterschied sollte sich dann auch in den Ausgaben manifestieren, die letztendlich vom Task-Kopf erzeugt werden, denn diese Ausgaben sind das, was in der jeweiligen Anwendung zum Tragen kommt. Die Repräsentationen im Arbeitsraum bekommt außer dem Task-Kopf niemand zu sehen.

Zu diesem Zweck werden die Trainings-Beispiele mit den jeweiligen Verarbeitungseinheiten auf Repräsentationen in dem Arbeitsraum abgebildet. Diese Repräsentationen werden jeweils mit einem Task-Kopf zu Ausgaben in Bezug auf die vorgegebene Aufgabe verarbeitet. Diese Ausgaben werden wiederum mit einer vorgegebenen Kostenfunktion L bewertet.

Die Kostenfunktion L bewertet die aus dem Negativ-Beispiel unter Nutzung der ersten Verarbeitungseinheit (und des Task-Kopfes) ermittelte Ausgabe einerseits und die aus dem zugehörigen Alternativ-Beispiel unter Nutzung der zweiten Verarbeitungseinheit (und des Task-Kopfes) ermittelte Ausgabe andererseits gegenläufig. Es wird also besonders gut bewertet, wenn bei einem Negativ-Beispiel die erste Verarbeitungseinheit gar nicht erst versucht, die Repräsentation noch auf irgendetwas Auswertbares "hinzubiegen", während zugleich die zweite Verarbeitungseinheit durch Verarbeitung des Alternativ-Beispiels brilliert.

Parameter, die das Verhalten der Verarbeitungseinheiten charakterisieren, werden auf das Ziel optimiert, die Bewertung durch die Kostenfunktion zu verbessern. Diese Optimierung kann beendet werden, wenn ein beliebiges Abbruchkriterium erfüllt ist. Das Abbruchkriterium kann beispielsweise in einem Wert der Kostenfunktion, in einer Konvergenz der Kostenfunktion gegen einen Endwert, oder auch in einer Anzahl Iterationen, bemessen sein.

Bei der Verarbeitung sämtlicher Repräsentationen, d.h. von Repräsentationen zu Positiv-Beispielen, zu Negativ-Beispielen und zu Alternativ-Beispielen, kommt ein und derselbe Task-Kopf zum Einsatz. Sofern dieser Task-Kopf trainierbar oder in sonstiger Weise parametriert ist, kommt er für alle Repräsentationen mit gleichen Parametern zum Einsatz.

Das Training kann insbesondere beispielsweise überwacht durchgeführt werden. Das heißt, die Trainings-Beispiele können jeweils mit Soll-Ausgaben als "ground truth" gelabelt sein, und die Kostenfunktion kann dann insbesondere eine Abweichung der jeweils erhaltenen Ausgaben von den Soll-Ausgaben messen.

Insbesondere kann beispielsweise ein Trainings-Beispiel zu einem Positiv-Beispiel werden, indem es als Positiv-Beispiel gelabelt wird und ihm eine Soll-Ausgabe zugewiesen wird. Negativ-Beispiele können insbesondere beispielsweise aus anderen Trainings-Beispielen erzeugt werden, indem gezielt die für die Lösung der vorgegebenen Aufgabe nutzbare Information entfernt wird. Beispielsweise kann aus einer Bildsequenz mit einem vortrainierten Netzwerk ein optischer Fluss zwischen aufeinanderfolgenden Bildern dieser Bildsequenz vorhergesagt werden, um hieraus dann ein Positiv-Beispiel zu erzeugen. Um ein Negativ-Beispiel zu erzeugen, kann hingegen mit dem vortrainierten Netzwerk ein optischer Fluss zwischen zwei identischen Bildern der Bildsequenz vorhergesagt werden.

In einer besonders vorteilhaften Ausgestaltung umfasst die Kostenfunktion eine Summe aus
- einem ersten Beitrag *L*_{1;} der die unter Nutzung der ersten Verarbeitungseinheit ermittelten Ausgaben für Positiv-Beispiele bewertet,
- einem zweiten Beitrag *L*₂, der die unter Nutzung der der ersten Verarbeitungseinheit ermittelten Ausgaben für Negativ-Beispiele bewertet, und
- einem dritten Beitrag *L*₃, der die unter Nutzung der zweiten Verarbeitungseinheit ermittelten Ausgaben für Alternativ-Beispiele bewertet.

Hierbei ist der Beitrag *L*₂ in dieser Summe mit anderem Vorzeichen vertreten als die Beiträge *L*₁ und *L*₃. Auf diese Weise wird neben einer guten Leistung der ersten Verarbeitungseinheit in Bezug auf Positiv-Beispiele auch der beschriebene Kontrast zwischen den Ausgaben für Negativ-Beispiele einerseits und für Alternativ-Beispiele andererseits wohlwollend bewertet. Dieser Kontrast stellt sich gerade nicht ein, wenn das Training der ersten Verarbeitungseinheit unerwünschter Weise in das Training der zweiten Verarbeitungseinheit übergeht, so dass faktisch der Unterschied zwischen den beiden Verarbeitungseinheiten verwässert wird.

In einer weiteren vorteilhaften Ausgestaltung werden zusätzlich Parameter optimiert, die das Verhalten des Task-Kopfes charakterisieren. Bei der Verarbeitung von Positiv-Beispielen, Negativ-Beispielen und Alternativ-Beispielen ist das Verhalten des Task-Kopfes dann jeweils durch gleiche Parameter charakterisiert. Auf diese Weise kann das Training der kompletten Vorrichtung für die Auswertung der Messdaten, die die beiden Verarbeitungseinheiten sowie den Task-Kopf umfasst, ganzheitlich darauf gerichtet werden, möglichst gute Ausgaben zu erzeugen. Das heißt, die beiden Verarbeitungseinheiten können darauf trainiert werden, dem Task-Kopf die Lösung der vorgegebenen Aufgabe möglichst einfach zu machen, indem sie die Messdaten hierfür passend aufbereiten. Der Task-Kopf wiederum kann darauf trainiert werden, aus guten Repräsentationen auch gute Ausgaben zu erzeugen und umgekehrt schlechte Repräsentationen (hier: solche von Negativ-Beispielen) auszusortieren.

In einer besonders vorteilhaften Ausgestaltung umfassen die Eingaben für die erste Verarbeitungseinheit dynamische Messungen einer physikalischen Messgröße in einem ersten Erfassungsbereich. Die Eingaben für die zweite Verarbeitungseinheit umfassen statische Messungen der gleichen physikalischen Messgröße in einem zweiten Erfassungsbereich. Hierbei überlappt dieser zweite Erfassungsbereich den ersten Erfassungsbereich zumindest teilweise. Das hier vorgeschlagene Trainingsverfahren erzwingt dann, dass sich trotz der Ähnlichkeit der beiden Messmodalitäten die Trainings der beiden Verarbeitungseinheiten nicht in die exakt gleiche Richtung entwickeln. Im Arbeitsraum bleibt also die Unabhängigkeit der beiden Messmodalitäten erhalten.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Verarbeitung von Messdaten 3, 3a, 3b;
Figur 2 Veranschaulichung des Gangs des Verfahrens 100 am Beispiel der Umfeldüberwachung eines Fahrzeugs 50;
Figur 3 Detaillierte Illustration der Bildung einer Gesamt-Repräsentation 8;
Figur 4 Ausführungsbeispiel des Verfahrens 200 zum Trainieren mindestens einer ersten Verarbeitungseinheit 4a und einer zweiten Verarbeitungseinheit 4b für den Einsatz in dem Verfahren 100;
Figur 5 Veranschaulichung des Gangs des Verfahrens 200 am Beispiel der Analyse von optischen Flüssen und statischen Bildern.

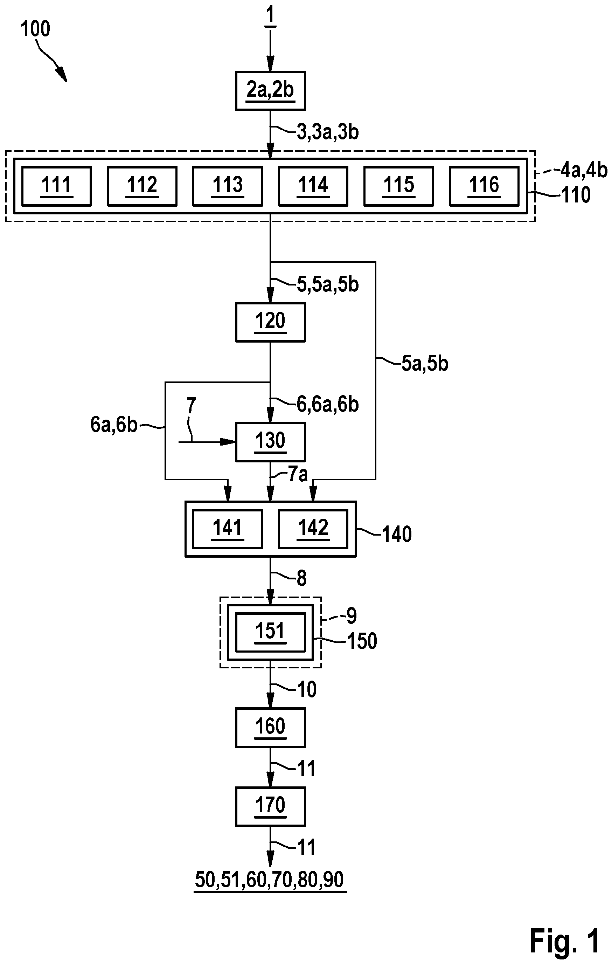

Figur 1 ist ein schematisches Ablaufdiagramm eines Ausführungsbeispiels des Verfahrens 100 zur Verarbeitung von Messdaten 3, 3a, 3b. Die Messdaten 3, 3a, 3b wurden durch Beobachtung einer Szenerie 1 mit einem oder mehreren Sensoren 2a, 2b erhalten.

In Schritt 110 werden verschiedene nicht deckungsgleiche Anteile 3a, 3b der Messdaten 3 mit verschiedenen trainierten Verarbeitungseinheiten 4a, 4b jeweils in Repräsentationen 5a, 5b in ein und demselben Arbeitsraum 5 überführt.

Gemäß Block 111 können hierbei beispielsweise verschiedene Anteile 3a, 3b der Messdaten 3 gewählt werden, die mit unterschiedlichen Sensoren 2a, 2b aufgenommen wurden.

Gemäß Block 112 kann sich beispielsweise ein erster Anteil 3a der Messdaten 3 auf Messungen eines dynamischen Verhaltens und ein zweiter Anteil 3b der Messdaten 3 auf Messungen eines statischen Zustands beziehen.

Gemäß Block 113 kann beispielsweise ein erster Anteil 3a der Messdaten 3 einen optischen Fluss in der Szenerie 1 umfassen, und ein zweiter Anteil 3b der Messdaten 3 kann Bilder der Szenerie 1 umfassen.

Gemäß Block 114 können die Verarbeitungseinheiten 4a, 4b beispielsweise Faltungsschichten beinhalten, die die Eingabe der jeweiligen Verarbeitungseinheit 4a, 4b durch gleitende Anwendung eines oder mehrerer Filter in ein oder mehrere Merkmalskarten als Repräsentation 5a, 5b überführen.

Gemäß Block 115 können die Repräsentationen 5a, 5b beispielsweise eine Segmentierung der Messdaten 3, 3a, 3b in Bezug auf in der Szenerie 1 vorhandene Objekte, und/oder Bounding-Boxen, die in der Szenerie 1 vorhandene Objekte einschließen, umfassen.

Gemäß Block 116 können die Sensoren 2a, 2b beispielsweise Kameras umfassen, die aus unterschiedlichen Perspektiven zumindest teilweise überlappende Bereiche der Szenerie 1 beobachten.

In Schritt 120 werden verschiedenen Anteilen 3a, 3b der Messdaten 3 und/oder Repräsentationen 5a, 5b Prioritäten 6a, 6b zugewiesen, mit denen sie für die Lösung der vorgegebenen Aufgabe herangezogen werden sollen. Wie zuvor erläutert, können sich diese Prioritäten 6a, 6b insbesondere beispielsweise nach den Erfordernissen der jeweiligen Anwendung richten. Es kann insbesondere beispielsweise ein Anteil 3a, 3b der Messdaten 3 priorisiert werden, für den eine bessere Aussicht besteht, dass in ihm nützliche Informationen für die Lösung der vorgegebenen Aufgabe enthalten sind.

In Schritt 130 wird anhand mindestens eines vorgegebenen Bewertungskriteriums 7 geprüft, ob die verschiedenen Anteile 3a, 3b der Messdaten 3 und/oder Repräsentationen 5a, 5b für die Lösung der vorgegebenen Aufgabe brauchbar sind. Es entsteht eine Bewertung 7a.

In Schritt 140 werden Repräsentationen 5a, 5b, insoweit sie als brauchbar identifiziert wurden bzw. sich auf als brauchbar identifizierte Anteile 3a, 3b der Messdaten 3 beziehen, nach Maßgabe ihrer Prioritäten 6a, 6b, bzw. der Prioritäten 6a, 6b der jeweils zugehörigen Anteile 3a, 3b der Messdaten 3, zu einer Gesamt-Repräsentation 8 fusioniert.

Gemäß Block 141 kann das Fusionieren insbesondere beispielsweise umfassen, aus den Repräsentationen 5a, 5b für als brauchbar identifizierte Anteile 3a, 3b der Messdaten 3 eine Repräsentation 5a, 5b des Anteils 3a, 3b der Messdaten 3 mit der höchsten Priorität 6a, 6b als Gesamt-Repräsentation 8 auszuwählen.

Gemäß Block 142 kann das Fusionieren insbesondere beispielsweise umfassen, Werte der Gesamt-Repräsentation 8 aus Werten verschiedener Repräsentationen 5a, 5b, die für sich genommen unverändert bleiben, zusammenzustellen.

In Schritt 150 wird die Gesamt-Repräsentation 8 mit einem trainierten Task-Kopf 9 zu einer Ausgabe 10 im Hinblick auf die vorgegebene Aufgabe verarbeitet.

Gemäß Block 151 kann die Ausgabe 10 des Task-Kopfes 9 insbesondere beispielsweise
- Klassifikations-Scores in Bezug auf eine oder mehrere Klassen einer vorgegebenen Klassifikation, und/oder
- mindestens einen Regressionswert einer gesuchten Größe in Bezug auf die Szenerie 1 und/oder ein in der Szenerie 1 enthaltenes Objekt
umfassen.

In dem in Figur 1 gezeigten Beispiel wird in Schritt 160 aus der Ausgabe 10 des Task-Kopfes 9 ein Ansteuersignal 11 ermittelt. In Schritt 170 wird dann ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung mit dem Ansteuersignal 11 angesteuert.

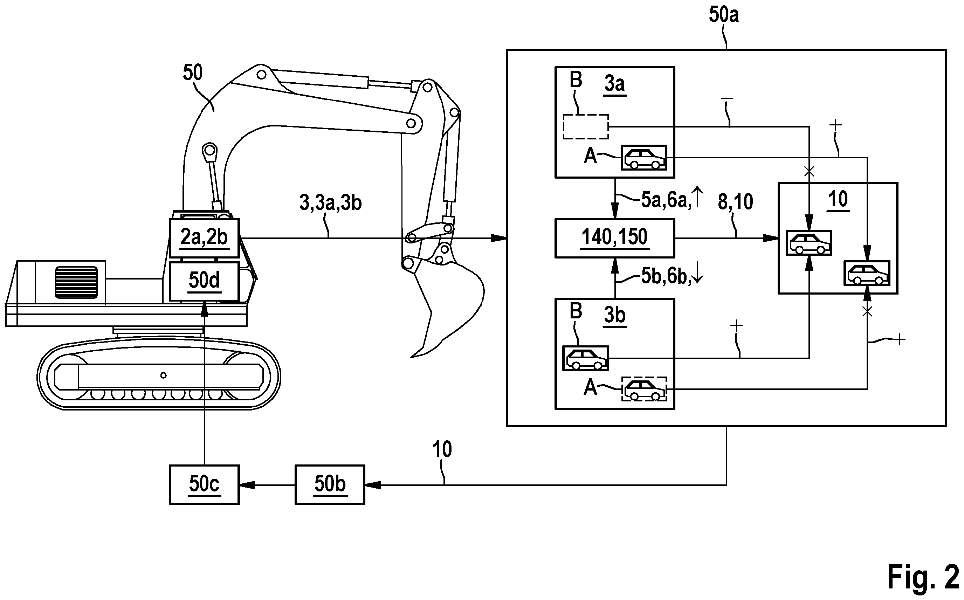

Figur 2 veranschaulicht den Gang des Verfahrens 100 am Beispiel der Umfeldüberwachung 50a eines Fahrzeugs 50, hier einem zumindest teilweise automatisiert fahrenden Bagger. Die Ausgabe 10 der Umfeldüberwachung 50a wird einer Planungskomponente 50b zugeführt, die das künftige Verhalten des Fahrzeugs 50 vorausplant und anhand dieses Plans eine Steuerung 50c des Fahrzeugs 50 ansteuert. Die Steuerung 50c wirkt wiederum auf Stellglieder 50d des Fahrzeugs 50, wie etwa Pedale und Hebel.

Die Messdaten 3 der Sensoren 2a, 2b umfassen in diesem Beispiel Kamerabilder, die als statische Bilder 3b genutzt werden können oder aber mit in Figur 2 nicht eingezeichneten Mitteln zu einem optischen Fluss 3a verarbeitet werden können. Für die Planung des künftigen Verhaltens des Fahrzeugs 50 sind bewegte Objekte im Umfeld des Fahrzeugs 50 besonders wichtig. Daher hat in dem in Figur 2 gezeigten Beispiel der optische Fluss als Anteil 3a der Messdaten 3 eine höhere Priorität 6a, während statische Bilder als Anteil 3b der Messdaten 3 eine niedrigere Priorität 6b haben.

In Figur 2 werden exemplarisch zwei Orte A und B im Umfeld des Fahrzeugs 50 näher untersucht.

Für den Ort A liefert der optische Fluss ein gültiges Signal (+). Daher wird bei der Fusion gemäß den Schritten 140 und 150 des Verfahrens 100 bezüglich des Orts A die Repräsentation 5a des Anteils 3a der Messdaten 3, also eine Information bezüglich des optischen Flusses, berücksichtigt. Die statischen Bilder des Anteils 3b liefern für den Ort A ebenfalls ein gültiges Signal, doch hat dies eine niedrigere Priorität und bleibt daher unberücksichtigt.

Für den Ort B liefert der optische Fluss hingegen kein gültiges Signal (-). Obwohl der optische Fluss eine höhere Priorität hat, bleibt er für den Ort B somit unberücksichtigt. Hingegen liefert für diesen Ort B die Analyse der statischen Bilder gemäß dem Anteil 3b der Messdaten 3 ein gültiges Signal. Daher wird bezüglich dieses Orts B die Repräsentation 5b dieses Anteils 3b berücksichtigt, obwohl sie eine niedrigere Priorität 6b hat.

Im Ergebnis enthält die Ausgabe 10 jeweils das Beste, was beide Messmodalitäten zu bieten haben. In dem in Figur 2 gezeigten Beispiel hat dies zur Folge, dass am Ort B, wo gemäß dem Anteil 3a der Messdaten 3 kein Objekt sein sollte, nun doch auf Grund des Anteils 3b der Messdaten 3 ein anderes Fahrzeug erkannt wird. Dadurch kann die Planung des Verhaltens des Fahrzeugs 50 so angepasst werden, dass eine Kollision mit diesem anderen Fahrzeug vermieden wird. Wäre hingegen alleine der optische Fluss im Anteil 3a auf Grund seiner höheren Priorität 6a berücksichtigt worden, wäre der Ort B als frei klassifiziert worden, was eine Kollision mit dem dort in Wahrheit befindlichen anderen Fahrzeug hätte auslösen können.

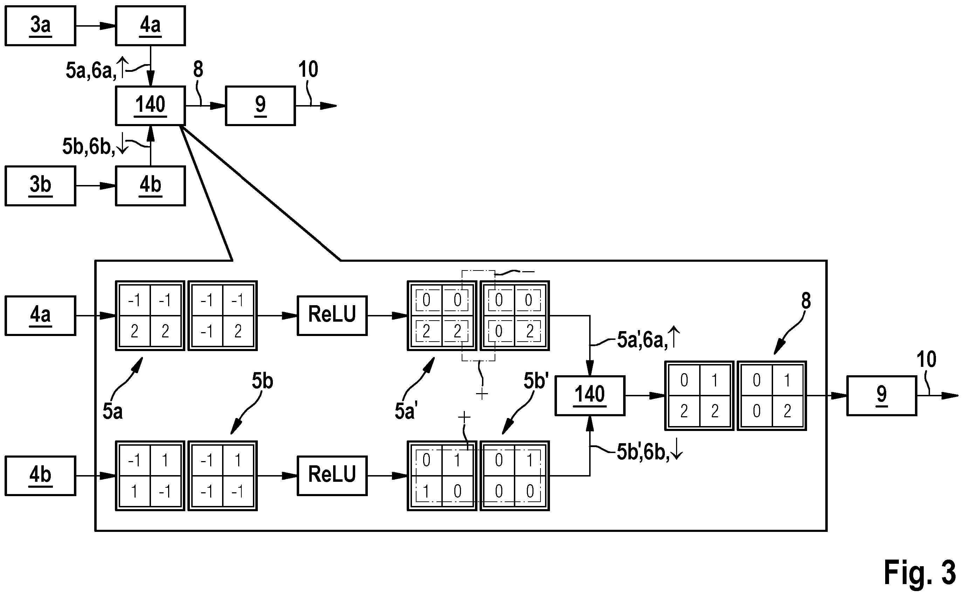

Figur 3 erläutert im Detail, wie eine Gesamt-Repräsentation 8 aus gültigen Anteilen von Repräsentationen 5a, 5b zusammengesetzt werden kann. Der grundlegende Aufbau ist links oben in Figur 3 dargestellt: Der Anteil 3a der Messdaten 3, der eine höhere Priorität 6a hat, wird mit der ersten Verarbeitungseinheit 4a zu einer Repräsentation 5a verarbeitet. Der Anteil 3b der Messdaten 3, der eine niedrigere Priorität 6b hat, wird mit der zweiten Verarbeitungseinheit 4b zu einer Repräsentation 5b verarbeitet. Die Fusion gemäß Schritt 140 des Verfahrens 100 entscheidet darüber, welche Anteile der Repräsentationen 5a und 6a in die Gesamt-Repräsentation 8 aufgenommen werden.

Dieser Prozess ist in der vom Schritt 140 ausgehenden Sprechblase näher dargestellt. Die Repräsentationen 5a und 5b werden jeweils zunächst durch Anwenden der ReLu-Funktion zu Repräsentationen 5a' bzw. 5b' vorverarbeitet. Es stellt sich dann heraus, dass nur die untere Hälfte der Repräsentation 5a' auf gültigen Daten beruht (+), während die obere Hälfte auf ungültigen Daten beruht und somit ebenfalls ungültig ist (-). Da gleichzeitig die Repräsentation 5b' mit der niedrigeren Priorität 6b in vollem Umfang gültig ist (+), kommt diese in der oberen Hälfte der Gesamt-Repräsentation 8 zum Zuge. In der unteren Hälfte wird der gültige Anteil der Repräsentation 5a' eingesetzt.

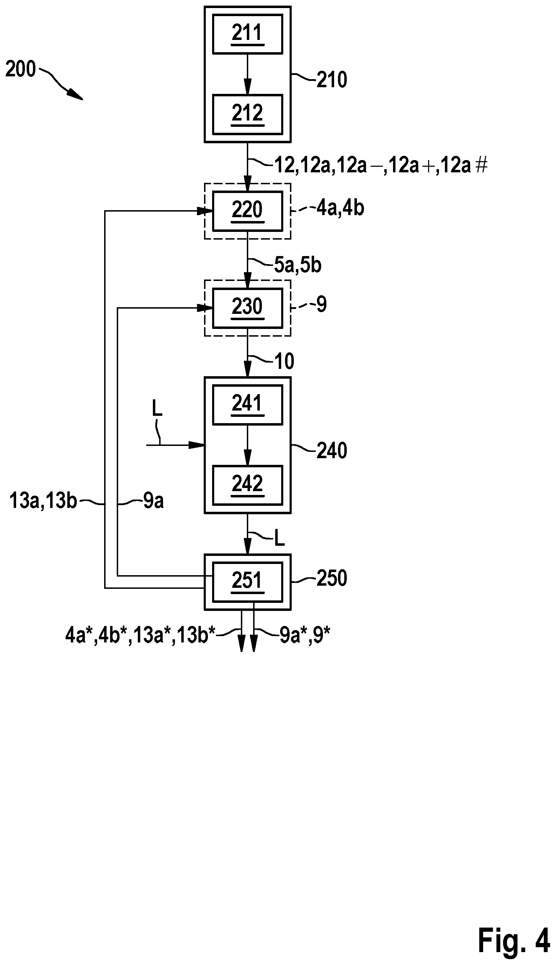

Figur 4 ist ein schematisches Ablaufdiagramm eines Ausführungsbeispiels des Verfahrens 200 zum Trainieren mindestens einer ersten Verarbeitungseinheit 4a und einer zweiten Verarbeitungseinheit 4b für den Einsatz in dem zuvor beschriebenen Verfahren 100.

In Schritt 210 wird ein Trainings-Datensatz 12 mit Trainings-Beispielen 12a für Messdaten 3 bereitgestellt. Dieser Trainings-Datensatz 12 enthält in Bezug auf Eingaben für die erste Verarbeitungseinheit 4a
- sowohl Positiv-Beispiele 12a+, für die bekannt ist, dass sie für die Lösung der vorgegebenen Aufgabe nutzbare Information enthalten,
- als auch Negativ-Beispiele 12a-, für die bekannt ist, dass sie keine für die Lösung der vorgegebenen Aufgabe nutzbare Information enthalten.

In Bezug auf Eingaben für die zweite Verarbeitungseinheit 4b enthält der Trainings-Datensatz 12 Alternativ-Beispiele 12a# enthält, die sich auf gleiche Szenerien 1 beziehen wie Negativ-Beispiele 12a-.

Gemäß Block 211 können die Eingaben für die erste Verarbeitungseinheit 4a insbesondere beispielsweise dynamische Messungen einer physikalischen Messgröße in einem ersten Erfassungsbereich umfassen. Die Eingaben für die zweite Verarbeitungseinheit 4b können dann gemäß Block 212 statische Messungen der gleichen physikalischen Messgröße in einem zweiten Erfassungsbereich umfassen, wobei dieser zweite Erfassungsbereich den ersten Erfassungsbereich zumindest teilweise überlappt.

In Schritt 220 werden die Trainings-Beispiele 12a mit den jeweiligen Verarbeitungseinheiten 4a, 4b auf Repräsentationen 5a, 5b in dem Arbeitsraum 5 abgebildet.

In Schritt 230 werden die Repräsentationen 5a, 5b werden jeweils mit einem Task-Kopf 9 zu Ausgaben 10 in Bezug auf die vorgegebene Aufgabe verarbeitet.

In Schritt 240 werden diese Ausgaben 10 mit einer vorgegebenen Kostenfunktion *L* bewertet. Diese Kostenfunktion *L* bewertet in einer durch ein Negativ-Beispiel (12a-) charakterisierten Szenerie 1
- die aus dem Negativ-Beispiel 12a- unter Nutzung der ersten Verarbeitungseinheit 4a ermittelte Ausgabe 10 einerseits und
- die aus dem zugehörigen Alternativ-Beispiel 12a# unter Nutzung der zweiten Verarbeitungseinheit 4b ermittelte Ausgabe 10 andererseits gegenläufig.

Dies kann gemäß Block 241 insbesondere beispielsweise beinhalten, dass die Kostenfunktion *L* eine Summe aus
- einem ersten Beitrag *L*_{1;} der die unter Nutzung der ersten Verarbeitungseinheit 4a ermittelten Ausgaben 10 für Positiv-Beispiele 12a+ bewertet,
- einem zweiten Beitrag *L*₂, der die unter Nutzung der der ersten Verarbeitungseinheit 4a ermittelten Ausgaben für Negativ-Beispiele 12a-bewertet, und
- einem dritten Beitrag *L*₃, der die unter Nutzung der zweiten Verarbeitungseinheit 4b ermittelten Ausgaben für Alternativ-Beispiele 12a# bewertet,
umfasst. Gemäß Block 242 ist dann der Beitrag *L*₂ in dieser Summe mit anderem Vorzeichen vertreten als die Beiträge *L*₁ und *L*₃.

In Schritt 250 werden Parameter 13a, 13b, die das Verhalten der Verarbeitungseinheiten 4a, 4b charakterisieren, auf das Ziel optimiert, die Bewertung durch die Kostenfunktion *L* zu verbessern. Der fertig optimierte Zustand der Parameter 13a, 13b ist mit den Bezugszeichen 13a* bzw. 13b* bezeichnet und legt den trainierten Zustand 4a* bzw. 4b* der Verarbeitungseinheiten 4a und 4b fest.

Gemäß Block 251 können zusätzlich Parameter 9a optimiert werden, die das Verhalten des Task-Kopfes 9 charakterisieren. Hierbei ist dann bei der Verarbeitung von Positiv-Beispielen 12a+, Negativ-Beispielen 12a- und Alternativ-Beispielen 12a# das Verhalten des Task-Kopfes 9 jeweils durch gleiche Parameter 9a charakterisiert. Der fertig optimierte Zustand der Parameter 9a ist mit dem Bezugszeichen 9a* bezeichnet und legt den trainierten Zustand 9* des Task-Kopfes 9 fest.

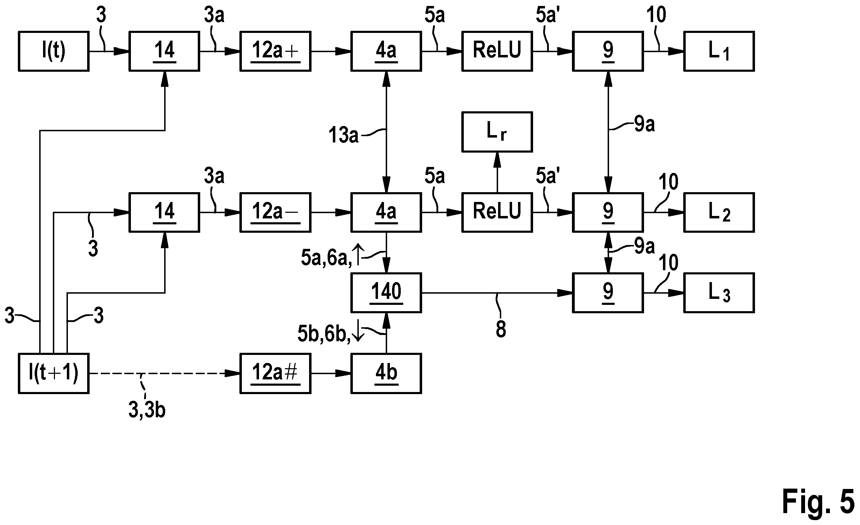

Figur 5 veranschaulicht das Trainingsverfahren 200 anhand eines Beispiels, in dem aus einer Folge von Bildern *I*(*t*),*I*(*t* + 1), ... als Messdaten 3
- zum einen mit einem trainierten Netzwerk 14 ein optischer Fluss als Anteil 3a der Messdaten 3 vorhergesagt wird und
- zum anderen statische Bilder als Anteil 3b der Messdaten 3 unmittelbar verwendet werden.

Wie zuvor erläutert, werden hierbei für die weitere Verarbeitung durch die erste Verarbeitungseinheit 4a gezielt
- Positiv-Beispiele 12a+ erzeugt, indem der optische Fluss vom Bild *I*(*t*) zum nächsten Bild *I*(*t* + 1) vorhergesagt wird, und
- Negativ-Beispiele 12a- erzeugt, indem der optische Fluss vom Bild *I*(*t* + 1) zum gleichen Bild *I*(*t* + 1) vorhergesagt wird.

Zugleich werden für Szenerien 1, die durch Negativ-Beispiele 12a-charakterisiert sind, Alternativ-Beispiele 12a# für die weitere Verarbeitung durch die zweite Verarbeitungseinheit 4b erzeugt. Hierzu wird das gleiche Bild *I*(*t* + 1), das zur Erzeugung des Negativ-Beispiels 12a- verwendet wurde, unmittelbar herangezogen.

In dem in Figur 5 gezeigten Beispiel wird angenommen, dass der erste Anteil 3a der Messdaten 3, der sich auf den optischen Fluss bezieht, eine höhere Priorität 6a hat als die Priorität 6b des Anteils 3b, der sich auf statische Bilder bezieht. Wenn ein Trainings-Beispiel 12a also ein Positiv-Beispiel 12a+ ist, ist erwünscht, dass dieses letztendlich zu einer Ausgabe 10 verarbeitet wird. Zu diesem Zweck wird das Positiv-Beispiel 12a+ von der ersten Verarbeitungseinheit 4a in eine Repräsentation 5a transformiert, die dann durch Anwendung der ReLU-Funktion in eine Repräsentation 5a' weiterverarbeitet wird. Diese Repräsentation 5a' wird dann vom Task-Kopf 9 zur Ausgabe 10 weiterverarbeitet, und diese Ausgabe 10 wird mit dem Anteil *L*₁ der Kostenfunktion *L* bewertet.

Wenn ein Trainings-Beispiel 12b ein Negativ-Beispiel 12- ist, ist hingegen erwünscht, dass stattdessen ein Alternativ-Beispiel 12# des Anteils 3b zur Ausgabe 10 verarbeitet wird. Da das Negativ-Beispiel 12- sich als nicht gültig erweist, kommt das Alternativ-Beispiel 12# bei der Fusion gemäß Schritt 140 des Verfahrens 100 trotz seiner geringeren Priorität 6b zum Zuge und wird zur Gesamt-Repräsentation 8 gekürt. Diese Gesamt-Repräsentation 8 wird wiederum vom Task-Kopf 9 zur Ausgabe 10 weiterverarbeitet. Diese Ausgabe 10 wird mit dem Anteil *L*₃ der Kostenfunktion *L* bewertet.

Zugleich ist aber auch ein Kontrast zu dem Ergebnis erwünscht, das erzielt wird, wenn stattdessen das Negativ-Beispiel 12- durch die erste Verarbeitungseinheit 4a zu einer Repräsentation 5a weiterverarbeitet wird und aus dieser Repräsentation 5a die Ausgabe 10 entsteht. Wie im Fall des Positiv-Beispiels 12a+ wird die Repräsentation 5a durch Anwendung der ReLU-Funktion in eine Repräsentation 5a' weiterverarbeitet. Danach kann optional schon ein Regularisierungs-Loss *Lᵣ* berechnet werden, indem alle Elemente der Repräsentation 5a' aufsummiert werden. Dieser Regularisierungs-Loss *Lᵣ* kann additiv in die Kostenfunktion *L* einbezogen werden. Die Repräsentation 5a' wird von dem Task-Kopf 9 zur Ausgabe 10 verarbeitet, die mit dem Anteil *L*₂ der Kostenfunktion *L* bewertet wird. Ein Kontrast zur Verarbeitung des Alternativ-Beispiels 12a# stellt sich nun gerade dann ein, wenn die Differenz zwischen *L*₂ und *L*₃ besonders groß ist, d.h. wenn der Task-Kopf 9 die Gesamt-Repräsentation 8 auf eine Ausgabe 10 abbildet, die von der für das Negativ-Beispiel 12a- und seine Repräsentation 5a' erhaltenen Ausgabe 10 im Kontext der vorgegebenen Aufgabe stark verschieden ist. Die Differenz zwischen *L*₂ und *L*₃ misst also gerade eine an diese vorgegebene Aufgabe gebundene Differenz und nicht etwa eine bloße vektorielle oder tensorielle Differenz als solche.

## Patentansprüche

1. Verfahren (100) zur Verarbeitung von Messdaten (3, 3a, 3b), die durch Beobachtung einer Szenerie (1) mit einem oder mehreren Sensoren (2a, 2b) erhalten wurden, im Hinblick auf die Lösung einer vorgegebenen Aufgabe, mit den Schritten:
• verschiedene nicht deckungsgleiche Anteile (3a, 3b) der Messdaten (3) werden mit verschiedenen trainierten Verarbeitungseinheiten (4a, 4b) jeweils in Repräsentationen (5a, 5b) in ein und demselben Arbeitsraum (5) überführt (110);
• verschiedenen Anteilen (3a, 3b) der Messdaten (3) und/oder Repräsentationen (5a, 5b) werden Prioritäten (6a, 6b) zugewiesen (120), mit denen sie für die Lösung der vorgegebenen Aufgabe herangezogen werden sollen;
• es wird anhand mindestens eines vorgegebenen Bewertungskriteriums (7) geprüft (130), ob die verschiedenen Anteile (3a, 3b) der Messdaten (3) und/oder Repräsentationen (5a, 5b) für die Lösung der vorgegebenen Aufgabe brauchbar sind;
• Repräsentationen (5a, 5b) werden, insoweit sie als brauchbar identifiziert wurden bzw. sich auf als brauchbar identifizierte Anteile (3a, 3b) der Messdaten (3) beziehen, nach Maßgabe ihrer Prioritäten (6a, 6b), bzw. der Prioritäten (6a, 6b) der jeweils zugehörigen Anteile (3a, 3b) der Messdaten (3), zu einer Gesamt-Repräsentation (8) fusioniert (140); und
• diese Gesamt-Repräsentation (8) wird mit einem trainierten Task-Kopf (9) zu einer Ausgabe (10) im Hinblick auf die vorgegebene Aufgabe verarbeitet (150).

2. Verfahren (100) nach Anspruch 1, wobei das Fusionieren umfasst, aus den Repräsentationen (5a, 5b) für als brauchbar identifizierte Anteile (3a, 3b) der Messdaten (3) eine Repräsentation (5a, 5b) des Anteils (3a, 3b) der Messdaten (3) mit der höchsten Priorität (6a, 6b) als Gesamt-Repräsentation (8) auszuwählen (141).

3. Verfahren (100) nach einem der Ansprüche 1 bis 2, wobei verschiedene Anteile (3a, 3b) der Messdaten (3) gewählt werden (111), die mit unterschiedlichen Sensoren (2a, 2b) aufgenommen wurden.

4. Verfahren (100) nach einem der Ansprüche 1 bis 3, wobei ein erster Anteil (3a) der Messdaten (3) sich auf Messungen eines dynamischen Verhaltens und ein zweiter Anteil (3b) der Messdaten (3) sich auf Messungen eines statischen Zustands bezieht (112).

5. Verfahren (100) nach einem der Ansprüche 1 bis 4, wobei ein erster Anteil (3a) der Messdaten (3) einen optischen Fluss in der Szenerie (1) umfasst und ein zweiter Anteil (3b) der Messdaten (3) Bilder der Szenerie (1) umfasst (113).

6. Verfahren (100) nach einem der Ansprüche 1 bis 5, wobei das Fusionieren umfasst, Werte der Gesamt-Repräsentation (8) aus Werten verschiedener Repräsentationen (5a, 5b), die für sich genommen unverändert bleiben, zusammenzustellen (142).

7. Verfahren (100) nach einem der Ansprüche 1 bis 6, wobei die Verarbeitungseinheiten (4a, 4b) Faltungsschichten beinhalten (114), die die Eingabe der jeweiligen Verarbeitungseinheit (4a, 4b) durch gleitende Anwendung eines oder mehrerer Filter in ein oder mehrere Merkmalskarten als Repräsentation (5a, 5b) überführen.

8. Verfahren (100) nach einem der Ansprüche 1 bis 7, wobei die Repräsentationen (5a, 5b) eine Segmentierung der Messdaten (3, 3a, 3b) in Bezug auf in der Szenerie (1) vorhandene Objekte, und/oder Bounding-Boxen, die in der Szenerie (1) vorhandene Objekte einschließen, umfassen (115).

9. Verfahren (100) nach einem der Ansprüche 1 bis 8, wobei die Sensoren (2a, 2b) Kameras umfassen (116), die aus unterschiedlichen Perspektiven zumindest teilweise überlappende Bereiche der Szenerie (1) beobachten.

10. Verfahren (100) nach einem der Ansprüche 1 bis 9, wobei die Ausgabe (10) des Task-Kopfes (9)
• Klassifikations-Scores in Bezug auf eine oder mehrere Klassen einer vorgegebenen Klassifikation, und/oder
• mindestens einen Regressionswert einer gesuchten Größe in Bezug auf die Szenerie (1) und/oder ein in der Szenerie (1) enthaltenes Objekt
umfasst (151).

11. Verfahren (100) nach einem der Ansprüche 1 bis 10, wobei
• aus der Ausgabe (10) des Task-Kopfes (9) ein Ansteuersignal (11) ermittelt wird (160) und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung mit dem Ansteuersignal (11) angesteuert wird (170).

12. Verfahren (200) zum Trainieren mindestens einer ersten Verarbeitungseinheit (4a) und einer zweiten Verarbeitungseinheit (4b) für den Einsatz in dem Verfahren (100) nach einem der Ansprüche 1 bis 11 mit den Schritten:
• es wird ein Trainings-Datensatz (12) mit Trainings-Beispielen (12a) für Messdaten (3) bereitgestellt (210), wobei der Trainings-Datensatz (12) in Bezug auf Eingaben für die erste Verarbeitungseinheit (4a)
o sowohl Positiv-Beispiele (12a+), für die bekannt ist, dass sie für die Lösung der vorgegebenen Aufgabe nutzbare Information enthalten,
o als auch Negativ-Beispiele (12a-), für die bekannt ist, dass sie keine für die Lösung der vorgegebenen Aufgabe nutzbare Information enthalten, enthält und wobei der Trainings-Datensatz (12) in Bezug auf Eingaben für die zweite Verarbeitungseinheit (4b) Alternativ-Beispiele (12a#) enthält, die sich auf gleiche Szenerien (1) beziehen wie Negativ-Beispiele (12a-);
• die Trainings-Beispiele (12a) werden mit den jeweiligen Verarbeitungseinheiten (4a, 4b) auf Repräsentationen (5a, 5b) in dem Arbeitsraum (5) abgebildet (220);
• diese Repräsentationen (5a, 5b) werden jeweils mit einem Task-Kopf (9) zu Ausgaben (10) in Bezug auf die vorgegebene Aufgabe verarbeitet (230);
• diese Ausgaben (10) werden mit einer vorgegebenen Kostenfunktion *L* bewertet (240), wobei diese Kostenfunktion *L* in einer durch ein Negativ-Beispiel (12a-) charakterisierten Szenerie (1)
o die aus dem Negativ-Beispiel (12a-) unter Nutzung der ersten Verarbeitungseinheit (4a) ermittelte Ausgabe (10) einerseits und
∘ die aus dem zugehörigen Alternativ-Beispiel (12a#) unter Nutzung der zweiten Verarbeitungseinheit (4b) ermittelte Ausgabe (10) andererseits
gegenläufig bewertet;
• Parameter (13a, 13b), die das Verhalten der Verarbeitungseinheiten (4a, 4b) charakterisieren, werden auf das Ziel optimiert (250), die Bewertung durch die Kostenfunktion *L* zu verbessern.

13. Verfahren (200) nach Anspruch 12, wobei die Kostenfunktion *L* eine Summe aus
• einem ersten Beitrag *L*₁, der die unter Nutzung der ersten Verarbeitungseinheit (4a) ermittelten Ausgaben (10) für Positiv-Beispiele (12a+) bewertet,
• einem zweiten Beitrag *L*₂, der die unter Nutzung der der ersten Verarbeitungseinheit (4a) ermittelten Ausgaben für Negativ-Beispiele (12a-) bewertet, und
• einem dritten Beitrag *L*₃, der die unter Nutzung der zweiten Verarbeitungseinheit (4b) ermittelten Ausgaben für Alternativ-Beispiele (12a#) bewertet,
umfasst (241) und wobei der Beitrag *L*₂ in dieser Summe mit anderem Vorzeichen vertreten ist (242) als die Beiträge *L*₁ und *L*₃.

14. Verfahren (200) nach einem der Ansprüche 12 bis 13, wobei
• zusätzlich Parameter (9a) optimiert werden (251), die das Verhalten des Task-Kopfes (9) charakterisieren, und
• bei der Verarbeitung von Positiv-Beispielen (12a+), Negativ-Beispielen (12a-) und Alternativ-Beispielen (12a#) das Verhalten des Task-Kopfes (9) jeweils durch gleiche Parameter (9a) charakterisiert ist.

15. Verfahren (200) nach einem der Ansprüche 12 bis 14, wobei
• die Eingaben für die erste Verarbeitungseinheit (4a) dynamische Messungen einer physikalischen Messgröße in einem ersten Erfassungsbereich umfassen (211) und
• die Eingaben für die zweite Verarbeitungseinheit (4b) statische Messungen der gleichen physikalischen Messgröße in einem zweiten Erfassungsbereich umfassen (212), wobei dieser zweite Erfassungsbereich den ersten Erfassungsbereich zumindest teilweise überlappt.

16. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, ein Verfahren (100, 200) nach einem der Ansprüche 1 bis 15 auszuführen.

17. Maschinenlesbarer Datenträger und/oder Downloadprodukt mit dem Computerprogramm nach Anspruch 16.

18. Ein oder mehrere Computer und/oder Compute-Instanzen mit dem Computerprogramm nach Anspruch 16, und/oder mit dem maschinenlesbaren Datenträger und/oder Downloadprodukt nach Anspruch 17.

## Geänderte Patentansprüche

### Geänderte Patentansprüche gemäss Regel 137(2) EPÜ.

1. Verfahren (100) zur Verarbeitung von Messdaten (3, 3a, 3b), die durch Beobachtung einer Szenerie (1) mit einem oder mehreren Sensoren (2a, 2b) erhalten wurden, im Hinblick auf die Lösung einer vorgegebenen Aufgabe, mit den Schritten:
• verschiedene nicht deckungsgleiche Anteile (3a, 3b) der Messdaten (3) werden mit verschiedenen trainierten Verarbeitungseinheiten (4a, 4b) jeweils in Repräsentationen (5a, 5b) in ein und demselben Arbeitsraum (5) überführt (110);
• verschiedenen Anteilen (3a, 3b) der Messdaten (3) und/oder Repräsentationen (5a, 5b) werden Prioritäten (6a, 6b) zugewiesen (120), mit denen sie für die Lösung der vorgegebenen Aufgabe herangezogen werden sollen;
• es wird anhand mindestens eines vorgegebenen Bewertungskriteriums (7) geprüft (130), ob die verschiedenen Anteile (3a, 3b) der Messdaten (3) und/oder Repräsentationen (5a, 5b) für die Lösung der vorgegebenen Aufgabe brauchbar sind;
• Repräsentationen (5a, 5b) werden, insoweit sie als brauchbar identifiziert wurden bzw. sich auf als brauchbar identifizierte Anteile (3a, 3b) der Messdaten (3) beziehen, nach Maßgabe ihrer Prioritäten (6a, 6b), bzw. der Prioritäten (6a, 6b) der jeweils zugehörigen Anteile (3a, 3b) der Messdaten (3), zu einer Gesamt-Repräsentation (8) fusioniert (140), wobei das Fusionieren umfasst, aus den Repräsentationen (5a, 5b) für als brauchbar identifizierte Anteile (3a, 3b) der Messdaten (3) eine Repräsentation (5a, 5b) des Anteils (3a, 3b) der Messdaten (3) mit der höchsten Priorität (6a, 6b) als Gesamt-Repräsentation (8) auszuwählen (141); und
• diese Gesamt-Repräsentation (8) wird mit einem trainierten Task-Kopf (9) zu einer Ausgabe (10) im Hinblick auf die vorgegebene Aufgabe verarbeitet (150).

2. Verfahren (100) nach Anspruch 1, wobei verschiedene Anteile (3a, 3b) der Messdaten (3) gewählt werden (111), die mit unterschiedlichen Sensoren (2a, 2b) aufgenommen wurden.

3. Verfahren (100) nach einem der Ansprüche 1 bis 2, wobei ein erster Anteil (3a) der Messdaten (3) sich auf Messungen eines dynamischen Verhaltens und ein zweiter Anteil (3b) der Messdaten (3) sich auf Messungen eines statischen Zustands bezieht (112).

4. Verfahren (100) nach einem der Ansprüche 1 bis 3, wobei ein erster Anteil (3a) der Messdaten (3) einen optischen Fluss in der Szenerie (1) umfasst und ein zweiter Anteil (3b) der Messdaten (3) Bilder der Szenerie (1) umfasst (113).

5. Verfahren (100) nach einem der Ansprüche 1 bis 4, wobei das Fusionieren umfasst, Werte der Gesamt-Repräsentation (8) aus Werten verschiedener Repräsentationen (5a, 5b), die für sich genommen unverändert bleiben, zusammenzustellen (142).

6. Verfahren (100) nach einem der Ansprüche 1 bis 5, wobei die Verarbeitungseinheiten (4a, 4b) Faltungsschichten beinhalten (114), die die Eingabe der jeweiligen Verarbeitungseinheit (4a, 4b) durch gleitende Anwendung eines oder mehrerer Filter in ein oder mehrere Merkmalskarten als Repräsentation (5a, 5b) überführen.

7. Verfahren (100) nach einem der Ansprüche 1 bis 6, wobei die Repräsentationen (5a, 5b) eine Segmentierung der Messdaten (3, 3a, 3b) in Bezug auf in der Szenerie (1) vorhandene Objekte, und/oder Bounding-Boxen, die in der Szenerie (1) vorhandene Objekte einschließen, umfassen (115).

8. Verfahren (100) nach einem der Ansprüche 1 bis 7, wobei die Sensoren (2a, 2b) Kameras umfassen (116), die aus unterschiedlichen Perspektiven zumindest teilweise überlappende Bereiche der Szenerie (1) beobachten.

9. Verfahren (100) nach einem der Ansprüche 1 bis 8, wobei die Ausgabe (10) des Task-Kopfes (9)
• Klassifikations-Scores in Bezug auf eine oder mehrere Klassen einer vorgegebenen Klassifikation, und/oder
• mindestens einen Regressionswert einer gesuchten Größe in Bezug auf die Szenerie (1) und/oder ein in der Szenerie (1) enthaltenes Objekt umfasst (151).

10. Verfahren (100) nach einem der Ansprüche 1 bis 9, wobei
• aus der Ausgabe (10) des Task-Kopfes (9) ein Ansteuersignal (11) ermittelt wird (160) und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung mit dem Ansteuersignal (11) angesteuert wird (170).

11. Verfahren (200) zum Trainieren mindestens einer ersten Verarbeitungseinheit (4a) und einer zweiten Verarbeitungseinheit (4b) für den Einsatz in dem Verfahren (100) nach einem der Ansprüche 1 bis 10 mit den Schritten:
• es wird ein Trainings-Datensatz (12) mit Trainings-Beispielen (12a) für Messdaten (3) bereitgestellt (210), wobei der Trainings-Datensatz (12) in Bezug auf Eingaben für die erste Verarbeitungseinheit (4a)
∘ sowohl Positiv-Beispiele (12a+), für die bekannt ist, dass sie für die Lösung der vorgegebenen Aufgabe nutzbare Information enthalten,
∘ als auch Negativ-Beispiele (12a-), für die bekannt ist, dass sie keine für die Lösung der vorgegebenen Aufgabe nutzbare Information enthalten,
enthält und wobei der Trainings-Datensatz (12) in Bezug auf Eingaben für die zweite Verarbeitungseinheit (4b) Alternativ-Beispiele (12a#) enthält, die sich auf gleiche Szenerien (1) beziehen wie Negativ-Beispiele (12a-);
• die Trainings-Beispiele (12a) werden mit den jeweiligen Verarbeitungseinheiten (4a, 4b) auf Repräsentationen (5a, 5b) in dem Arbeitsraum (5) abgebildet (220);
• diese Repräsentationen (5a, 5b) werden jeweils mit einem Task-Kopf (9) zu Ausgaben (10) in Bezug auf die vorgegebene Aufgabe verarbeitet (230);
• diese Ausgaben (10) werden mit einer vorgegebenen Kostenfunktion L bewertet (240), wobei diese Kostenfunktion L in einer durch ein Negativ-Beispiel (12a-) charakterisierten Szenerie (1)
∘ die aus dem Negativ-Beispiel (12a-) unter Nutzung der ersten Verarbeitungseinheit (4a) ermittelte Ausgabe (10) einerseits und
∘ die aus dem zugehörigen Alternativ-Beispiel (12a#) unter Nutzung der zweiten Verarbeitungseinheit (4b) ermittelte Ausgabe (10) andererseits gegenläufig bewertet;
• Parameter (13a, 13b), die das Verhalten der Verarbeitungseinheiten (4a, 4b) charakterisieren, werden auf das Ziel optimiert (250), die Bewertung durch die Kostenfunktion L zu verbessern.

12. Verfahren (200) nach Anspruch 11, wobei die Kostenfunktion L eine Summe aus
• einem ersten Beitrag *L*₁, der die unter Nutzung der ersten Verarbeitungseinheit (4a) ermittelten Ausgaben (10) für Positiv-Beispiele (12a+) bewertet,
• einem zweiten Beitrag *L*₂, der die unter Nutzung der der ersten Verarbeitungseinheit (4a) ermittelten Ausgaben für Negativ-Beispiele (12a-) bewertet, und
• einem dritten Beitrag *L*₃, der die unter Nutzung der zweiten Verarbeitungseinheit (4b) ermittelten Ausgaben für Alternativ-Beispiele (12a#) bewertet, umfasst (241) und wobei der Beitrag *L*₂ in dieser Summe mit anderem Vorzeichen vertreten ist (242) als die Beiträge *L*₁ und *L*₃.

13. Verfahren (200) nach einem der Ansprüche 11 bis 12, wobei
• zusätzlich Parameter (9a) optimiert werden (251), die das Verhalten des Task-Kopfes (9) charakterisieren, und
• bei der Verarbeitung von Positiv-Beispielen (12a+), Negativ-Beispielen (12a-) und Alternativ-Beispielen (12a#) das Verhalten des Task-Kopfes (9) jeweils durch gleiche Parameter (9a) charakterisiert ist.

14. Verfahren (200) nach einem der Ansprüche 11 bis 13, wobei
• die Eingaben für die erste Verarbeitungseinheit (4a) dynamische Messungen einer physikalischen Messgröße in einem ersten Erfassungsbereich umfassen (211) und
• die Eingaben für die zweite Verarbeitungseinheit (4b) statische Messungen der gleichen physikalischen Messgröße in einem zweiten Erfassungsbereich umfassen (212), wobei dieser zweite Erfassungsbereich den ersten Erfassungsbereich zumindest teilweise überlappt.

15. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, ein Verfahren (100, 200) nach einem der Ansprüche 1 bis 14 auszuführen.

16. Maschinenlesbarer Datenträger und/oder Downloadprodukt mit dem Computerprogramm nach Anspruch 15.

17. Ein oder mehrere Computer und/oder Compute-Instanzen mit dem Computerprogramm nach Anspruch 15, und/oder mit dem maschinenlesbaren Datenträger und/oder Downloadprodukt nach Anspruch 16.
